# EUROPÄISCHE PATENTANMELDUNG

(11) **EP 4 606 196 A1**
(43) Veröffentlichungstag der Anmeldung: **27.08.2025**
(21) Anmeldenummer: 25153716.3
(22) Anmeldetag: 24.01.2025
(51) Int. Cl.: A01B 63/111, A01B 63/112

(54) **ARBEITSZUG MIT EINEM SCHLEPPER UND EINEM ANBAUGERÄT**

(30) Priorität: 21.02.2024 DE 102024104853
(71) Anmelder: Maschinenfabrik Bernard Krone GmbH & Co. KG, 48480 Spelle (DE)
(72) Erfinder: Horstmann, Jan, 48431 Rheine (DE)

(57) **Zusammenfassung**

Die Erfindung betrifft einen Arbeitszug (1) mit einem Schlepper (2), aufweisend einen Fahrzeugkörper (3), eine Schlepper-Steuereinheit (5) sowie ein von dieser ansteuerbares, verstellbares Schlepper-Hubwerk (6), das einen gegenüber dem Fahrzeugkörper (3) schwenkbaren Oberlenker (7) aufweist sowie zwei bezüglich einer Querachse (Y) seitlich hierzu versetzte und bezüglich einer Hochachse (Z) wenigstens teilweise darunter angeordnete Unterlenker (9), die aktorisch gegenüber dem Fahrzeugkörper (3) schwenkbar sind, sowie mit einem Anbaugerät (15, 25), das im Betriebszustand am Schlepper-Hubwerk (6) angekoppelt ist und das wenigstens einen Untergrundsensor (21) sowie eine Anbaugerät-Steuereinheit (23) aufweist, die dazu eingerichtet ist, mittels des wenigstens einen Untergrundsensors (21) einen Führungsparameter (F, H) des Anbaugeräts (15, 25) in Relation zu einem Untergrund (50) zu detektieren und mit einem Sollwert (Fs, Hs) zu vergleichen. Um , die Effektivität eines Anbaugeräts an einem Dreipunkthubwerk eines Schleppers bei unebenem Untergrund zu optimieren, ist erfindungsgemäß vorgesehen, dass die Anbaugerät-Steuereinheit (23) dazu eingerichtet ist, bei einer Abweichung vom Sollwert (Fs, Hs) das Schlepper-Hubwerk (6) wenigstens indirekt anzusteuern, um eine Korrektur vorzunehmen, durch welche der Führungsparameter (F, H) zumindest an den Sollwert (Fs, Hs) angenähert wird.

## Beschreibung

Die vorliegende Erfindung betrifft einen Arbeitszug nach dem Oberbegriff von Anspruch 1 sowie ein Anbaugerät nach dem Oberbegriff von Anspruch 15.

Landwirtschaftliche Schlepper können heutzutage oftmals nicht nur als Zugmaschine dienen, sondern weisen zudem Dreipunkthubwerk auf, an welches ein Anbaugerät angekoppelt werden kann. Das Gewicht des Anbaugeräts kann somit ganz oder teilweise vom Schlepper getragen werden. Das Dreipunkthubwerk weist einen Oberlenker auf sowie zwei Unterlenker, die typischerweise durch Hydraulikzylinder geschwenkt werden können. Durch das Schwenken der Unterlenker kann das Hubwerk mit dem Anbaugerät angehoben oder abgesenkt werden, wodurch entweder ein Abstand zum Boden verändert werden kann oder, sofern das Anbaugerät Bodenkontakt hat, ein Bodendruck verändert werden kann. Das Anbaugerät kann außerdem durch den Schlepper mit Antriebsenergie versorgt werden. Die Energieübertragung kann mechanisch über eine Zapfwelle, hydraulisch oder elektrisch erfolgen. Das Dreipunkthubwerk kann als Front- oder Heckhubwerk ausgebildet sein. Im letzteren Fall kann der Schlepper in der Regel eine größere Last tragen. Je nach Art des Anbaugeräts wird der Schlepper während des Einsatzes rückwärts gefahren, wozu entweder die gesamte Fahrerkabine oder zumindest der Fahrersitz und die Bedienelemente um 180° gedreht werden können, um dem Fahrer Sicht in Fahrtrichtung zu ermöglichen. Ein optimaler Einsatz des Anbaugeräts erfordert eine geeignete Einstellung des Hubwerks. Da sich das Profil des Untergrunds bei der Feldbearbeitung in der Regel wiederholt ändert, ist eine anfangs als optimal gewählte Einstellung allerdings normalerweise nicht durchgehend geeignet.

Der Erfindung liegt daher die Aufgabe zugrunde, die Effektivität eines Anbaugeräts an einem Dreipunkthubwerk eines Schleppers bei unebenem Untergrund zu optimieren.

Dafür wird ein Arbeitszug geschaffen mit einem Schlepper, aufweisend einen Fahrzeugkörper, eine Schlepper-Steuereinheit sowie ein von dieser ansteuerbares, verstellbares Schlepper-Hubwerk, das einen gegenüber dem Fahrzeugkörper schwenkbaren Oberlenker aufweist sowie zwei bezüglich einer Querachse seitlich hierzu versetzte und bezüglich einer Hochachse wenigstens teilweise darunter angeordnete Unterlenker, die aktorisch gegenüber dem Fahrzeugkörper schwenkbar sind, sowie mit einem Anbaugerät, das im Betriebszustand am Schlepper-Hubwerk angekoppelt ist und das wenigstens eine Anbaugerät-Steuereinheit sowie wenigstens einen Untergrundsensor aufweist, wobei die Anbaugerät-Steuereinheit dazu eingerichtet ist, mittels des wenigstens einen Untergrundsensors einen Führungsparameter des Anbaugeräts relativ zu einem Untergrund zu detektieren und mit einem Sollwert zu vergleichen.

Der Schlepper, der zumindest in einigen Ausführungsformen auch als Zugmaschine, Traktor oder dergleichen bezeichnet werden kann, ist selbstfahrend ausgebildet. Normalerweise ist er zur Steuerung durch einen Fahrer ausgebildet und weist einen Fahrerstand auf, also einen Bereich, der für den Aufenthalt des Fahrers ausgelegt ist und der den Fahrersitz aufweist sowie die Bedienelemente, mit welchen der Fahrer den Schlepper bedient. Es ist im Rahmen der Erfindung allerdings auch möglich, dass der Schlepper als autonomes Fahrzeug ausgebildet ist, das zumindest während der Feldbearbeitung ohne menschliche Steuerung fährt. Der Schlepper weist einen Fahrzeugkörper auf, der normalerweise den größten Teil des Schleppers ausmacht. Der Fahrzeugkörper kann einen Hauptrahmen aufweisen, der wesentlich für die strukturelle Stabilität des Schleppers ist. Am Fahrzeugkörper ist u.a. ein Fahrwerk angeordnet. Der oben genannte Fahrerstand ist am oder im Fahrzeugkörper ausgebildet.

Der Schlepper weist eine Schlepper-Steuereinheit auf. Diese kann zur Steuerung verschiedener Funktionen des Schleppers dienen. Sie kann teilweise softwaremäßig implementiert sein. Der Begriff "Steuereinheit" ist hier und im Folgenden rein funktional zu verstehen und impliziert nicht, dass die Steuereinheit zusammenhängend an einem einzigen Ort angeordnet sein muss. Vielmehr kann die Steuereinheit aus miteinander verbundenen Komponenten bestehen, die voneinander beabstandet sein können. In der Regel ist die Schlepper-Steuereinheit vollständig innerhalb des Fahrzeugkörpers angeordnet.

Weiterhin ist ein Schlepper-Hubwerk vorgesehen, welches von der Schlepper-Steuereinheit angesteuert werden kann. Das heißt die Bewegungen des Schlepper-Hubwerks können wenigstens teilweise durch die Schlepper-Steuereinheit gesteuert werden. Das Schlepper-Hubwerk kann bezüglich der normalen Fahrtrichtung des Schleppers an einer Vorderseite oder an einer Hinterseite des Fahrzeugkörpers angeordnet sein. In jedem Fall ist es gegenüber dem Fahrzeugkörper verstellbar. Dabei weist es einen gegenüber dem Fahrzeugkörper schwenkbaren Oberlenker auf sowie zwei bezüglich einer Querachse seitlich hierzu versetzte und bezüglich einer Hochachse wenigstens teilweise darunter angeordnete Unterlenker, die aktorisch gegenüber dem Fahrzeugkörper schwenkbar sind. Insgesamt sind drei Lenker vorgesehen, die jeweils schwenkbar mit dem Fahrzeugkörper verbunden sind. Zumindest der Oberlenker einerseits und die Unterlenker andererseits sind unabhängig voneinander schwenkbar, je nach Ausführungsform können auch die Unterlenker unabhängig voneinander schwenkbar sein. Jeder der Lenker weist an seinem schlepperfernen Ende einen Anbindungspunkt auf, der zum Beispiel als Fanghaken ausgebildet sein kann. Insgesamt sind also drei Anbindungspunkte vorhanden, weshalb das Schlepper-Hubwerk auch als Dreipunkt-Hubwerk bezeichnet werden kann. Die Unterlenker sind aktorisch schwenkbar, wozu jeweils ein Linearaktor an einem Unterlenker sowie am Fahrzeugkörper ansetzen kann. Diese Linearaktoren können als Hydraulikzylinder ausgebildet sein. Sie werden nachfolgend als Unterlenker-Aktoren oder speziell als Unterlenker-Zylinder bezeichnet. Neben einer aktiven Verstellung der Unterlenker können die Unterlenker-Aktoren, wenn sie zum Beispiel als Hydraulikzylinder ausgebildet sind, auch als passive Federelemente wirken. Die Schlepper-Steuereinheit kann das Schlepper-Hubwerk ansteuern, was bedeutet, dass sie wenigstens einen Aktor, bevorzugt alle Aktoren, des Schlepper-Hubwerks ansteuern kann.

Weiterhin weist der Arbeitszug ein Anbaugerät auf, das im Betriebszustand am Schlepper-Hubwerk angekoppelt ist. Das Anbaugerät weist hierzu Ankopplungspunkte auf, die den Ankopplungspunkten des Schlepper-Hubwerks entsprechen. In der Regel ist jeder Lenker zumindest in begrenztem Maß schwenkbar mit dem Anbaugerät verbunden. Im Betriebszustand ist das Anbaugerät ganz oder teilweise am Schlepper-Hubwerk und somit am Schlepper abgestützt, so dass dieser wenigstens einen Teil der Gewichtskraft des Anbaugeräts aufnimmt. Neben der mechanischen Verbindung können auch Verbindungen zur Energieübertragung und/oder zur Signalübertragung vorgesehen sein. Allgemein dient das Anbaugerät zur Feldbearbeitung, wobei der Schlepper je nach Aufgabe mit unterschiedlichen Anbaugeräten kombinierbar ist. Beispielsweise kann das Anbaugerät als Feldhäcksler, Feldspritze, Grubber, Schwader oder dergleichen ausgebildet sein. Das Anbaugerät kann seinerseits modular aufgebaut sein, zum Beispiel können im Falle eines Feldhäckslers unterschiedliche Vorsätze mit einem Einzugsrahmen kombiniert werden.

Das Anbaugerät weist wenigstens eine Anbaugerät-Steuereinheit sowie wenigstens einen Untergrundsensor auf. Die Steuereinheit kann zur Steuerung verschiedener Funktionen des Anbaugeräts dienen. Auch sie kann teilweise softwaremäßig implementiert sein. In der Regel ist die Anbaugerät-Steuereinheit innerhalb eines schützenden Rahmens oder Gehäuses des Anbaugeräts angeordnet. Sie ist dazu eingerichtet, mittels des wenigstens einen Untergrundsensors einen Führungsparameter des Anbaugeräts relativ zu einem Untergrund zu detektieren und mit einem Sollwert zu vergleichen. Der Begriff "Führungsparameter" bezieht sich darauf, dass der Parameter im weitesten Sinn charakterisiert, wie das Anbaugerät relativ zum Untergrund geführt wird. Der Untergrund ist derjenige unterhalb des Anbaugeräts, also im Betriebszustand normalerweise die Oberfläche eines Feldes, das vom Arbeitszug bearbeitet wird. Der Führungsparameter ist durch die Einstellung des Schlepper-Hubwerks beeinflussbar. Außerdem hängt er vom Bodenprofil ab, welches normalerweise lokal unterschiedlich ist. Der jeweilige Untergrundsensor detektiert den Führungsparameter direkt oder indirekt, das heißt aus den Messwerten des Untergrundsensors kann zumindest auf den Führungsparameter geschlossen werden. Je nach Ausführungsform ist es möglich, dass der Führungsparameter keinem momentanen Messwert entspricht, sondern zum Beispiel einem zeitlich gemittelten Messwert. Die Anbaugerät-Steuereinheit detektiert den Führungsparameter und vergleicht ihn mit einem Sollwert. Der Sollwert kann innerhalb der Anbaugerät-Steuereinheit abgespeichert sein oder in einem Speicher, auf denen die Anbaugerät-Steuereinheit Zugriff hat. Wenngleich hier von "einem Sollwert" die Rede ist, schließt dies ausdrücklich auch die Möglichkeit ein, dass ein Sollwertbereich definiert ist. In diesem Fall ist allerdings eine Überprüfung, ob der Führungsparameter innerhalb des Sollwertbereichs liegt, gleichbedeutend mit einem Vergleich, ob der Führungsparameter oberhalb einer oberen Bereichsgrenze oder unterhalb einer unteren Bereichsgrenze liegt. Insofern kann auch in diesem Fall von einem Vergleich mit (wenigstens) einem Sollwert gesprochen werden.

Erfindungsgemäß ist die Anbaugerät-Steuereinheit dazu eingerichtet, bei einer Abweichung vom Sollwert das Schlepper-Hubwerk wenigstens indirekt anzusteuern, um eine Korrektur vorzunehmen, durch die der Führungsparameter wenigstens an den Sollwert angenähert wird. Das heißt, wenn der Führungsparameter vom Sollwert abweicht, führt die Anbaugerät-Steuereinheit eine Korrektur aus. Hierzu steuert sie, entweder direkt oder indirekt über wenigstens ein zwischengeordnetes Element, das Schlepper-Hubwerk an. Anders ausgedrückt, die Korrektur erfolgt mittels des Schlepper-Hubwerks. Die Anbaugerät-Steuereinheit ist dafür bevorzugt dazu eingerichtet, ein Steuerkommando an die Schlepper-Steuereinheit zu senden. Dies schließt die Möglichkeit ein, dass wenigstens zeitweise andere Mittel zur Korrektur der Abweichung genutzt werden. In jedem Fall wird das Schlepper-Hubwerk, welches dem Schlepper zugeordnet ist, durch die Anbaugerät-Steuereinheit gesteuert, die dem Anbaugerät zugeordnet ist. Die Korrektur erfolgt derart, dass der Führungsparameter wenigstens an den Sollwert angenähert wird und diesen bevorzugt auch erreicht. Im Gegensatz zu im Stand der Technik bekannten Konfigurationen, bei welchen der Schlepper Funktionen des Anbaugeräts kontrolliert, ist es bei dem erfindungsgemäßen Arbeitszug umgekehrt. Der große Vorteil liegt darin begründet, dass die Logik, die der Regelung des Führungsparameters zugrunde liegt, vollständig im Anbaugerät implementiert sein kann. Die Anbaugerät-Steuereinheit, in welcher die zugrunde liegenden Regeln hardware- und/oder softwaremäßig abgelegt sein können, nutzt einerseits eine im Anbaugerät angeordnete Sensorik sowie andererseits eine am Schlepper angeordnete Aktorik, um den Führungsparameter zu regeln. Hinsichtlich der zugrundeliegenden Regelungslogik wird der Schlepper vollständig entlastet.

Besonders bevorzugt ist der Oberlenker durch einen Oberlenker-Aktor längenverstellbar und die Anbaugerät-Steuereinheit ist dazu eingerichtet, den Oberlenker-Aktor wenigstens indirekt anzusteuern, um die Korrektur vorzunehmen. Der Oberlenker-Aktor ist regelmäßig als Linearaktor ausgebildet, zum Beispiel als Hydraulikzylinder. Er kann auch als Oberlenker-Zylinder bezeichnet werden. Während die Verstellung der Unterlenker normalerweise eine Höhenverstellung des Anbaugeräts bewirkt, ohne dessen Winkelorientierung wesentlich zu verändern, führt eine Längenänderung des Oberlenker-Aktors in jedem Fall zu einer wenigstens anteiligen Schwenkbewegung des Anbaugeräts. Die Schwenkachse verläuft dabei durch die Anbindungspunkte der Unterlenker am Anbaugerät. Die absolute Verstellung ist umso größer, je weiter ein bestimmter Teil des Anbaugeräts von der Schwenkachse entfernt ist. In aller Regel kann durch eine Verstellung des Oberlenker-Aktors eine wesentlich schnellere Führungsparameteranpassung vorgenommen werden als durch eine Verstellung der Unterlenker. Hierin liegt ein besonderer Vorteil dieser Ausführungsform, da eine schnelle Anpassung an kurzzeitig auftretende Abweichungen vom Sollwert möglich ist.

Gemäß einer Ausgestaltung ist der Führungsparameter ein Abstand des Anbaugeräts vom Untergrund bezüglich einer Hochachse und wenigstens ein Untergrundsensor ist als Abstandssensor ausgebildet. Der Führungsparameter kann also als vertikaler Abstand vom Untergrund bezeichnet werden. Normalerweise ist der Abstand bezüglich unterschiedlicher Bereiche des Anbaugeräts unterschiedlich, zum einen aufgrund der Form des Anbaugeräts sowie zum anderen aufgrund der im Allgemeinen nicht ebenen Oberfläche des Untergrunds. Somit detektiert der Abstandssensor den Abstand in einem bestimmten Bereich. Es wäre auch denkbar, dass eine Mehrzahl von Abstandssensoren individuell im Allgemeinen unterschiedliche Abstände ermittelt, die dann zum Beispiel zu einem gemittelten Abstandswert kombiniert werden können. Der Abstandssensor kann den Abstand berührungslos messen, zum Beispiel mittels Ultraschall, Radar oder Lidar. Der Abstand kann allerdings auch durch Berührung des Untergrunds ertastet werden, wobei der Abstandssensor einen Taster aufweist, der durch Berührung verformt und/oder ausgelenkt wird.

Gemäß einer anderen Ausgestaltung ist der Führungsparameter eine zwischen dem Anbaugerät und dem Untergrund wirkende Last und wenigstens ein Untergrundsensor ist als Lastsensor ausgebildet. Der Begriff "Last" ist hier im mechanischen Sinn zu verstehen und bezieht sich auf einen Druck oder aber auf eine Kraft, die zwischen dem Anbaugerät und dem Untergrund wirkt. In diesem Zusammenhang wird oftmals von einem Bodendruck gesprochen und der Sensor als Bodendrucksensor bezeichnet, auch wenn tatsächlich eine Kraft gemessen wird. Auch die Last (also die Kraft oder der Druck) kann in unterschiedlichen Bereichen des Anbaugeräts gemessen werden und dabei lokal unterschiedliche Werte annehmen. Auch in diesem Fall können eine Mehrzahl von Lastsensoren individuell im Allgemeinen unterschiedliche Lasten ermitteln, die dann zum Beispiel zu einer gemittelten Last kombiniert werden können. Soweit eine Kraft gemessen werden soll, kann diese auch gewissermaßen indirekt ermittelt werden, indem gemessen wird, mit welcher Kraft das Anbaugerät seitens des Schlepper-Hubwerks abgestützt werden muss. Hieraus lässt sich bei Kenntnis des Gewichts des Anbaugeräts ermitteln, welche Kraft insgesamt zwischen Anbaugerät und Untergrund wirkt.

Eine Ausführungsform sieht vor, dass die Anbaugerät-Steuereinheit dazu eingerichtet ist, ein Steuerkommando an die Schlepper-Steuereinheit zu senden, durch welches die Schlepper-Steuereinheit das Schlepper-Hubwerk ansteuert, um die Korrektur vorzunehmen. Das heißt es besteht im Betriebszustand eine Verbindung zwischen der Anbaugerät-Steuereinheit und der Schlepper-Steuereinheit. Die Verbindung ist zumindest einseitig gegeben, so dass die Anbaugerät-Steuereinheit das Steuerkommando senden und die Schlepper-Steuereinheit dieses empfangen kann. Es kann auch eine beidseitige Verbindung gegeben sein, so dass die Schlepper-Steuereinheit zum Beispiel eine Rückmeldung oder Bestätigung senden kann. Der Begriff "Steuerkommando" bezieht sich normalerweise auf ein digitales Kommando oder Signal, er schließt allerdings auch ein analoges Signal ein. In jedem Fall führt der Empfang des Steuerkommandos dazu, dass die Schlepper-Steuereinheit ihrerseits das Schlepper-Hubwerk so ansteuert, dass die Korrektur erfolgt. In diesem Fall erfolgt also eine indirekte Steuerung des Schlepper-Hubwerks durch die Anbaugerät-Steuereinheit über die Schlepper-Steuereinheit. Diese Ausführungsform kann insbesondere durch TIM (tractor implement management) realisiert werden.

Das Steuerkommando kann unter Umständen drahtlos übertragen werden, zum Beispiel über ein WLAN, das die beiden Steuereinheit verbindet. Unter anderem aus Gründen der Übertragungssicherheit kann es allerdings vorteilhaft sein, wenn das Anbaugerät im Betriebszustand über eine drahtgebundene Schnittstelle mit dem Schlepper verbunden ist, über welche Schnittstelle das Steuerkommando übertragbar ist. Die Schnittstelle kann insbesondere zu einem Datenbus gehören, der den Schlepper mit dem Anbaugerät verbindet. Hierbei kann es sich zum Beispiel um einen CAN-Bus handeln, welcher die hardwaremäßige Basis eines ISOBUS-Systems bildet.

Normalerweise alternativ zu der oben beschriebenen Übertragung eines Steuerkommandos an die Schlepper-Steuereinheit kann vorgesehen sein, dass die Anbaugerät-Steuereinheit das Schlepper-Hubwerk direkt ansteuert. Eine entsprechende Ausführungsform sieht vor, dass wenigstens ein Aktor des Schlepper-Hubwerks derart mit dem Anbaugerät verbindbar ist, dass er unter Umgehung der Schlepper-Steuereinheit von der Anbaugerät-Steuereinheit ansteuerbar ist, um die Korrektur vorzunehmen. Je nach Bauart des Aktors kann die Verbindung zum Anbaugerät unterschiedlicher Art sein. In der Regel handelt es sich bei dem Aktor um einen Hydraulikaktor, so dass die Verbindung hydraulischer Art ist. Es wird also eine Hydraulikverbindung hergestellt, zum Beispiel indem eine Hydraulikleitung mit dem Anbaugerät verbunden wird, die andernfalls mit einem Hydrauliksystem des Schleppers verbunden werden könnte. Die Anbaugerät-Steuereinheit kann die Hydraulikversorgung des Aktors über wenigstens ein entsprechendes Ventil kontrollieren und diesen so ansteuern. In jedem Fall umgeht die entsprechende Ansteuerung die Schlepper-Steuereinheit, das heißt diese ist an der Ansteuerung des Aktors nicht beteiligt. Es muss also keine Verbindung zwischen den beiden Steuereinheiten hergestellt werden. Diese Ausgestaltung kann sogar dann realisiert werden, wenn die beiden Steuereinheiten zueinander inkompatibel sind, also eine Übertragung von Steuerkommandos gar nicht möglich ist.

In einigen Ausführungsformen kann der Führungsparameter nur durch das Schlepper-Hubwerk beeinflusst werden. Eine andere Ausgestaltung sieht vor, dass das Anbaugerät einen im Betriebszustand mit dem Schlepper-Hubwerk verbundenen ersten Geräteabschnitt sowie einen zweiten Geräteabschnitt aufweist, welcher durch ein von der Anbaugerät-Steuereinheit ansteuerbares Anbaugerät-Hubwerk gegenüber dem ersten Geräteabschnitt verstellbar ist, um den Führungsparameter zu verändern. Das Anbaugerät-Hubwerk weist wenigstens einen Aktor auf, der zum Beispiel hydraulisch oder elektrisch betreibbar sein kann. Während der erste Geräteabschnitt mit dem Schlepper-Hubwerk verbunden ist und somit stationär bleibt, solange das Schlepper-Hubwerk stationär gehalten wird, ist der zweite Geräteabschnitt relativ zum Schlepper-Hubwerk verstellbar. Normalerweise sind am zweiten Geräteabschnitt diejenigen Elemente angeordnet, die der eigentlichen Feldbearbeitung dienen, zum Beispiel ein Maiserntevorsatz, eine Pickup oder dergleichen. Durch Verstellen des Anbaugerät-Hubwerks kann der Führungsparameter normalerweise schnell angepasst werden, allerdings ist der Einstellungsbereich unter Umständen beschränkt. U.a. deshalb ist es sinnvoll, die Verstellung des Anbaugerät-Hubwerks in geeigneter Weise durch die Verstellung des Schlepper-Hubwerks zu ergänzen. Das heißt bei dieser Ausführungsform nutzt die Anbaugerät-Steuereinheit sowohl das Anbaugerät-Hubwerk als auch das Schlepper-Hubwerk, um eine Führungsparameteranpassung zu erreichen.

Das Anbaugerät-Hubwerk kann oftmals schnelle Korrekturbewegungen ausführen, u.a. weil nur ein Teil des Anbaugeräts (nämlich der zweite Geräteabschnitt) bewegt wird. Andererseits ist der Bewegungsspielraum des Anbaugerät-Hubwerks typischerweise eher gering, zum Beispiel entsprechend einem Höhenunterschied von weniger als 30 cm. Ausgehend von einer Mittelposition ist in jeder Richtung nur die Hälfte dieser Strecke an Höhenkorrektur möglich (zum Beispiel weniger als 15 cm), was unter Umständen nicht ausreicht, um ein stark unebenes Bodenprofil auszugleichen. Vorteilhaft kann vorgesehen sein, kurzfristige Korrekturen mit dem Anbaugerät-Hubwerk auszuführen und diese durch Korrekturen zu ergänzen, die mit dem Schlepper-Hubwerk ausgeführt werden, welches oftmals langsamer reagiert, allerdings einen größeren Bewegungsspielraum hat. Eine entsprechende Ausgestaltung sieht vor, dass die Anbaugerät-Steuereinheit dazu eingerichtet ist, zunächst eine Primärkorrektur vorzunehmen, bei welcher sie das Anbaugerät-Hubwerk ansteuert und aus einer Ausgangsposition herausführt, und nachfolgend eine Sekundärkorrektur vorzunehmen, bei welcher sie wenigstens indirekt das Schlepper-Hubwerk entsprechend der Primärkorrektur ansteuert und das Anbaugerät-Hubwerk entgegengesetzt zur Primärkorrektur ansteuert und zurück in Richtung der Ausgangsposition führt. Das heißt es wird bei einer Korrektur, durch welche der Parameter an den Sollwert angenähert wird, zunächst eine Primärkorrektur durchgeführt. Diese Primärkorrektur erfolgt mittels des Anbaugerät-Hubwerks, das dabei aus einer Ausgangsposition herausgeführt wird. Die Ausgangsposition kann insbesondere eine Mittelposition sein, die von entgegengesetzten Endpositionen gleich weit entfernt ist. Eine solche Mittelposition ist optimal unter der Annahme, dass eine Bewegung in beide Richtungen gleich wahrscheinlich ist. Nach der Primärkorrektur ist das Anbaugerät-Hubwerk näher an einer Endposition angeordnet, was den Bewegungsspielraum für eine weitere Korrektur einschränkt. Daher wird nachfolgend eine Sekundärkorrektur mittels des Schlepper-Hubwerks ausgeführt, wobei die Bewegungsrichtung der Sekundärkorrektur der Primärkorrektur entspricht. Wenn also das Anbaugerät-Hubwerk bei der Primärkorrektur anhebend betrieben wird, wird auch das Schlepper-Hubwerk bei der Sekundärkorrektur anhebend betrieben. Man könnte auch sagen, dass das Schlepper-Hubwerk die Bewegung des Anbaugerät-Hubwerks nachvollzieht. Außerdem wird bei der Sekundärkorrektur das Anbaugerät-Hubwerk entgegengesetzt zur Primärkorrektur verstellt, was dazu führt, dass es sich zumindest der Ausgangsposition wieder annähert und bevorzugt in diese zurückgeführt wird. Die Bewegungen des Schlepper-Hubwerks und des Anbaugerät-Hubwerks kompensieren einander dabei wenigstens teilweise oder auch vollständig, so dass der Führungsparameter vor und nach der Sekundärkorrektur wenigstens annähernd gleich ist. Durch die Sekundärkorrektur gelangt das Anbaugerät-Hubwerk wieder in eine Position, aus der Primärkorrekturen in beide Richtungen optimal ausgeführt werden können. Bei dieser Ausführungsform werden im Rahmen der Sekundärkorrektur bevorzugt die Unterlenker angesteuert, ergänzend oder alternativ könnte auch der Oberlenker genutzt werden.

Auch eine Korrektur mittels des Oberlenkers kann im Allgemeinen wesentlich schneller ausgeführt werden als eine Korrektur mittels der Unterlenker. Allerdings bewirkt eine Korrektur mittels des Oberlenkers, wie oben erläutert im Wesentlichen ein Schwenken des Anbaugeräts, während eine Korrektur mittels der Unterlenker im Wesentlichen einer Translation mit allenfalls geringen rotatorischen Anteilen entspricht. Daher kann eine Verstellung mittels des Oberlenkers zu einer möglicherweise nicht optimalen (Winkel-)Ausrichtung des Anbaugeräts führen. Es kann vorteilhaft sein, eine Korrektur mittels des Oberlenkers mit einer Korrektur mittels der Unterlenker zu kombinieren, in vergleichbarer Weise wie bei der oben geschilderten Ausführungsform eine Korrektur mittels des Anbaugerät-Hubwerks mit einer Korrektur mittels des Schlepper-Hubwerks kombiniert wird. Eine entsprechende Ausführungsform sieht vor, dass die Anbaugerät-Steuereinheit dazu eingerichtet ist, zunächst eine Primärkorrektur vorzunehmen, bei welcher sie den Oberlenker ansteuert und aus einer Ausgangsposition herausführt, und nachfolgend eine Sekundärkorrektur vorzunehmen, bei welcher sie wenigstens indirekt die Unterlenker entsprechend der Primärkorrektur ansteuert und den Oberlenker entgegengesetzt zur Primärkorrektur ansteuert und zurück in Richtung der Ausgangsposition führt. Die obigen Erläuterungen lassen sich auf diese Ausführungsform analog übertragen und werden daher nicht nochmals wiederholt. Auch bei dieser Ausführungsform kann die Ausgangsposition insbesondere eine Mittelposition sein, die gleich weit von denen Endpositionen des Oberlenkers und/oder des Oberlenker-Aktors entfernt ist. Anbaugerät oder ein Teil desselben (beispielsweise ein Maiserntevorsatz eines Anbauhäckslers) waagerecht ausgerichtet ist.

Vorteilhaft ist die Anbaugerät-Steuereinheit dazu eingerichtet, die Sekundärkorrektur vorzunehmen, wenn eine Wartezeit ab Beginn der Primärkorrektur abgelaufen ist. Die Wartezeit kann fest vordefiniert sein. Kurzzeitige Primärkorrekturen führen nicht unmittelbar zu einer Sekundärkorrektur. Letztere wird eingeleitet, wenn die Wartezeit verstrichen ist. Unter Umständen hat sich die Primärkorrektur zu diesem Zeitpunkt bereits wieder reduziert, so dass eine nur geringe Sekundärkorrektur nötig ist. In jedem Fall wird durch die Wartezeit vermieden, dass gewissermaßen ständig Sekundärkorrekturen ausgeführt werden, was steuerungstechnisch kompliziert sein kann und außerdem zu einem unnötigen Energieverbrauch durch die beteiligten Aktoren führen könnte.

Alternativ oder zusätzlich kann die Anbaugerät-Steuereinheit dazu eingerichtet sein, die Sekundärkorrektur vorzunehmen, wenn die Primärkorrektur zu einer Mindestauslenkung aus der Ausgangsposition führt. Das heißt kleinere Auslenkungen aus der Ausgangsposition führen zu keiner Sekundärkorrektur, sie werden gewissermaßen ignoriert. Erst wenn eine vordefinierte Mindestauslenkung erreicht ist, die zum Beispiel ein Annäherung von 20% oder 50% an eine Endposition entsprechen kann, wird die Sekundärkorrektur ausgeführt. Somit kann verhindert werden, dass kleinere Primärkorrekturen zwangsläufig eine Sekundärkorrektur auslösen.

Vorteilhaft weist das Anbaugerät eine Benutzerschnittstelle auf, über welche der Sollwert eingebbar ist. Die eigentlichen Eingabemittel (zum Beispiel Tasten oder ein Touchscreen) können in das Anbaugerät integriert sein, sie könnten aber auch zum Beispiel in einem Terminal integriert sein, das für die Eingabe drahtgebunden oder drahtlos mit dem Anbaugerät gekoppelt wird.

Durch die Erfindung wird des Weiteren ein Anbaugerät für einen solchen Arbeitszug geschaffen. Das Anbaugerät ist am Schlepper-Hubwerk ankoppelbar und weist wenigstens eine Anbaugerät-Steuereinheit sowie wenigstens einen Untergrundsensor auf, wobei die Anbaugerät-Steuereinheit dazu eingerichtet ist, mittels des wenigstens einen Untergrundsensors einen Führungsparameter des Anbaugeräts relativ zu einem Untergrund zu detektieren und mit einem Sollwert zu vergleichen. Erfindungsgemäß ist die Anbaugerät-Steuereinheit dazu eingerichtet, bei einer Abweichung vom Sollwert das Schlepper-Hubwerk wenigstens indirekt anzusteuern, um eine Korrektur vorzunehmen, durch welche der Führungsparameter wenigstens an den Sollwert angenähert wird. Vorzugsweise sendet die Anbaugerät-Steuereinheit dafür ein Steuerkommando, insbesondere an eine Schlepper- Steuereinheit des Schleppers, an dessen Schlepper-Hubwerk das Anbaugerät angekoppelt ist. Die Schlepper-Steuereinheit kann dann ihrerseits das Schlepper-Hubwerk so ansteuern, dass die Korrektur erfolgt.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine schematische Seitenansicht einer ersten Ausführungsform eines erfindungsgemäßen Arbeitszugs auf einem Feld;
- Fig. 2: ein Diagramm, das den zeitlichen Verlauf verschiedener für die Steuerung des Arbeitszugs aus Fig.1 relevanter Größen zeigt;
- Fig. 3: eine schematische Seitenansicht einer zweiten Ausführungsform eines erfindungsgemäßen Arbeitszugs auf einem Feld; sowie
- Fig. 4: ein Diagramm, das den zeitlichen Verlauf verschiedener für die Steuerung des Arbeitszugs aus Fig.2 relevanter Größen zeigt.

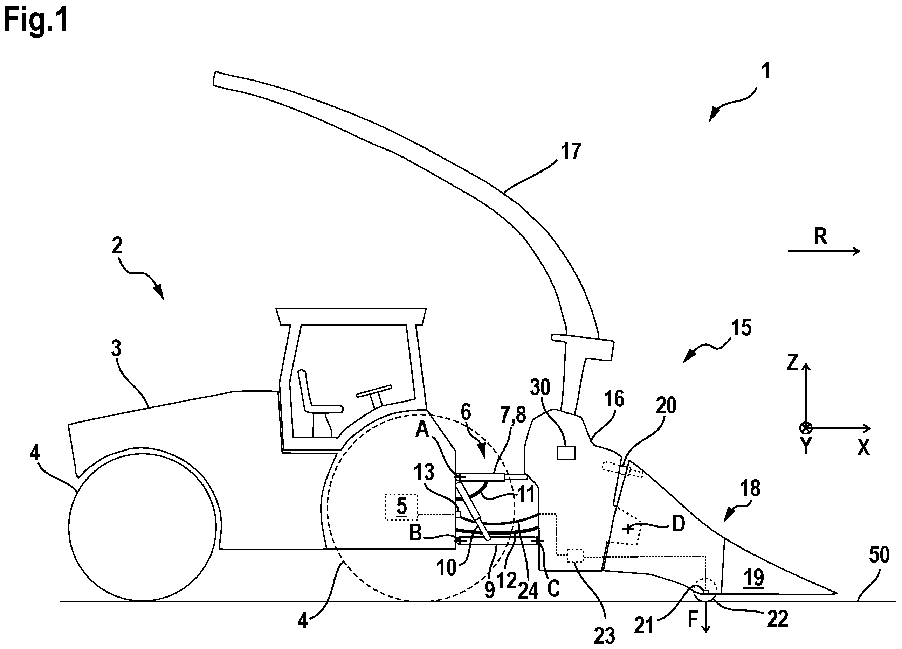

Fig. 1 zeigt eine erste Ausführungsform eines erfindungsgemäßen Arbeitszugs 1 auf einem Untergrund 50, zum Beispiel einem zu bearbeitenden Feld. Der Arbeitszug 1 weist einen Schlepper 2 auf, der von einem nicht dargestellten Fahrer gesteuert wird. Zur Orientierung sind in den Figuren eine zum Heck des Schleppers 2 weisende Längsachse X, eine Querachse Y sowie eine Hochachse Z des Arbeitszugs 1 eingezeichnet. Der Schlepper 2 weist einen Fahrzeugkörper 3 mit daran angeordneten Rädern 4 auf. An ein heckseitiges Schlepper-Hubwerk 6 des Schleppers 2 ist ein Anbaugerät angekoppelt, in diesem Fall ein Anbauhäcksler 15. Um den Anbauhäcksler 15 sinnvoll betreiben zu können, wird der Schlepper 2 in einer zum Heck weisenden Fahrtrichtung R gefahren, also rückwärts. Um dem Fahrer eine Sicht in Fahrtrichtung R zu ermöglichen, ist entweder die Fahrerkabine in ihrer Gesamtheit oder wenigstens der Fahrersitz sowie Steuerelemente wie das Lenkrad um 180° nach hinten geschwenkt.

Das Schlepper-Hubwerk 6, welches als Dreipunkt-Hubwerk ausgebildet ist, weist einen Oberlenker 7 auf, der um eine horizontale erste Schwenkachse A gegenüber dem Fahrzeugkörper 3 schwenkbar ist. Er ist im Wesentlichen durch einen Oberlenker-Aktor 8 gebildet, der als Hydraulikzylinder ausgebildet ist und über eine erste Hydraulikleitung 11 mit dem Fahrzeugkörper 3 verbunden ist. Weiterhin weist das Schlepper-Hubwerk 6 zwei Unterlenker 9 auf, die um eine zweite Schwenkachse B schwenkbar mit dem Fahrzeugkörper 3 verbunden sind. Dabei sind sie durch jeweils einen Unterlenker-Aktor 10 aktorisch schwenkbar. Auch die Unterlenker-Aktoren 10 sind als Hydraulikzylinder ausgebildet und durch nicht dargestellte Hydraulikleitungen mit dem Fahrzeugkörper 3 verbunden. Wenn der Oberlenker-Aktor 8 expandiert oder kontrahiert, führt dies dazu, dass der Anbauhäcksler 15 um eine dritte Schwenkachse C endseitig der Unterlenker geschwenkt wird. Wenn die Unterlenker-Aktoren 10 aktiviert werden, führt dies zu einer gleichzeitigen Schwenkbewegung des Oberlenkers 7 und der Unterlenker 9, wodurch der Anbauhäcksler 15 vertikal verstellt werden kann, während sich seine Winkelausrichtung relativ zum Schlepper 2 nur wenig ändert. Sowohl der Oberlenker-Aktor 8 als auch die Unterlenker-Aktoren 10 können von der Schlepper-Steuereinheit 5 angesteuert werden. Der Fahrzeugkörper 3 weist auch eine drahtgebundene Schnittstelle 13 auf, die mit der Schlepper-Steuereinheit 5 signalübertragend verbunden ist. In diesem Fall handelt es sich um eine ISOBUS-Schnittstelle.

Der Anbauhäcksler 15 weist einen Einzugsrahmen (ohne Bezugszeichen) auf, an den bezüglich der Fahrtrichtung R vorderseitig ein Erntevorsatz 19 angekoppelt ist, der je nach Bedarf ausgetauscht werden kann. In diesem Fall kann es sich beispielsweise um einen Maiserntevorsatz handeln. Ein Teil des Einzugsrahmens bildet zusammen mit einem Auswurfbogen 17 einen ersten Geräteabschnitt 16, während ein anderer Teil des Einzugsrahmens sowie der Erntevorsatz 19 einen zweiten Geräteabschnitt 18 bilden. Der erste Geräteteil 16 ist mit dem Schlepper-Hubwerk 6 verbunden. Der zweite Geräteabschnitt 18 ist um eine vierte Schwenkachse D gegenüber dem ersten Geräteabschnitt 16 schwenkbar, wobei der Schwenkvorgang durch ein Anbaugerät-Hubwerk 20 bewirkt wird. Das Anbaugerät-Hubwerk 20 kann durch einen oder mehrere Hydraulikzylinder gebildet sein, die über eine zweite Hydraulikleitung 12 seitens des Schleppers 2 versorgt werden. Unterseitig des zweiten Geräteabschnitts 18 ist an einem Tastrad 22 ein Untergrundsensor 21 angeordnet, der eine Kraft F misst, die zwischen dem Tastrad 22 und dem Untergrund 50 wirkt. Die Kraft F stellt einen Führungsparameter des Feldhäckslers 15 relativ zum Untergrund 50 dar.

Eine Anbaugerät-Steuereinheit 23 ist einerseits signalübertragend mit dem Untergrundsensor 21 verbunden sowie andererseits über eine Busleitung 24 und die Schnittstelle 13 mit der Schlepper-Steuereinheit 5. Die Anbaugerät-Steuereinheit 23 ermittelt die Kraft F mittels des Untergrundsensors 21 und vergleicht diese mit einem Sollwert Fs. Der Sollwert Fs kann vor Beginn der Feldbearbeitung über eine schematisch dargestellte Benutzerschnittstelle 30 des Feldhäckslers 15 eingegeben werden. Wenn eine Abweichung festgestellt wird, führt die Anbaugerät-Steuereinheit 23 eine Korrektur durch. Dazu sendet sie Steuerkommandos an die Schlepper-Steuereinheit 5, aus denen hervorgeht, wie die Schlepper-Steuereinheit 5 die Aktoren 8, 10 des Schlepper-Hubwerks 6 ansteuern soll. Außerdem kann die Anbaugerät-Steuereinheit 23 direkt das Anbaugerät-Hubwerk 20 ansteuern. Grundsätzlich kann die Kraft F auf drei verschiedene Arten verändert werden, nämlich über den Oberlenker-Aktor 8, über die Unterlenker-Aktoren 10 oder über das Anbaugerät-Hubwerk 20. Dabei kann mittels des Anbaugerät-Hubwerks 20 am schnellsten auf Abweichungen reagiert werden, da dieses nur die vergleichsweise geringe Masse des zweiten Geräteabschnitts 18 bewegen muss. Eine Korrektur mittels des Oberlenker-Aktors 8 kann ebenfalls vergleichsweise schnell erfolgen, während eine Korrektur mittels der Unterlenker-Aktoren 10 am langsamsten ist. Letzteres ist zum einen dadurch begründet, dass hier die Masse des gesamten Anbauhäckslers 15 angehoben oder abgesenkt werden muss, zum anderen durch die diesbezüglich weniger günstige geometrische Anordnung der Unterlenker-Aktoren 10 und der Unterlenker 9.

Während somit eine Korrektur durch die Unterlenker-Aktoren 10 vergleichsweise langsam ist, hat eine Korrektur mittels des Oberlenker-Aktors 8 den Nachteil, dass sie die Winkelausrichtung des gesamten Anbauhäckslers 15 ändert. Eine Korrektur mittels des Anbaugerät-Hubwerks 20 hat wiederum den Nachteil, dass der Bewegungsspielraum hier vergleichsweise klein ist (zum Beispiel insgesamt weniger als 30 cm). Daher lassen sich größere Korrekturen allein mit dem Anbaugerät-Hubwerk 20 nicht realisieren.

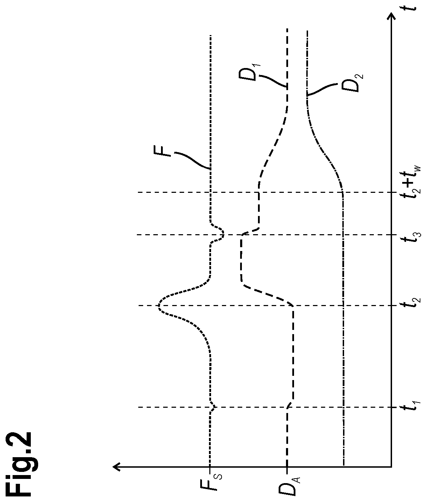

Aus den genannten Gründen führt die Anbaugerät-Steuereinheit eine kombinierte Korrekturstrategie durch, die mit Bezug auf das Diagramm in Fig.2 erläutert wird. Dabei sind (in dimensionslosen Einheiten) zum einen die Kraft F als kurz gestrichelte Linie dargestellt, sowie eine erste Position D₁ des Anbaugerät-Hubwerks 20 als lang gestrichelte Linie und eine zweite Position D₂ der Unterlenker 9. Die dargestellten Verläufe sind vereinfacht, um das Funktionsprinzip zu erläutern. Zu Beginn entspricht die Kraft F dem Sollwert Fs und die erste Position D₁ entspricht einer Ausgangsposition D_{A}, zum Beispiel einer Mittelposition zwischen einer oberen und einer unteren Endposition. Kurz vor einem ersten Zeitpunkt t₁ erfolgt aufgrund einer Änderung des Bodenprofils ein Absinken der Kraft F unter den Sollwert Fs, was zum Zeitpunkt t₁ durch eine Verringerung der ersten Position D₁ kompensiert wird. Die Veränderung der ersten Position D₁ ist dabei unterhalb einer Mindestauslenkung und wird somit zunächst ignoriert. Zu einem zweiten Zeitpunkt t₂ ist eine größere Korrektur notwendig, die durch ein Erhöhen der ersten Position D₁ erfolgt. Zu einem dritten Zeitpunkt t₃ ist eine geringfügige weitere Korrektur nötig, wobei die erste Position D₁ leicht verringert wird. Ausgehend vom Beginn der zweiten Korrektur zum Zeitpunkt t₂ misst die Anbaugerät-Steuereinheit 23 eine Wartezeit t_{w}. Wenn diese verstrichen ist, führt die Anbaugerät-Steuereinheit 23 eine Sekundärkorrektur aus, deren Ziel es ist, die erste Position D₁ des Anbaugerät-Hubwerks 20 wieder in die Ausgangsposition D_{A} zurückzuführen. Hierzu wird die zweite Position D₂ der Unterlenker 9 entsprechend der Primärkorrektur verändert, in diesem Fall also erhöht, während die erste Position D₁ entgegengesetzt zur Primärkorrektur verändert wird, in diesem Fall also verringert wird. Idealerweise kompensieren die beiden Veränderungen einander vollständig, so dass die Kraft F konstant bleibt, wie in Fig.2 dargestellt. In der Praxis können allerdings Abweichungen auftreten.

Wie in Fig.2 angedeutet ist, kann die Sekundärkorrektur nur vergleichsweise langsam erfolgen. Aus diesen Gründen werden zum einen Veränderungen der ersten Position D₁ ignoriert, sofern sie (wie zum Zeitpunkt t₁) unter einer Mindestauslenkung gegenüber der Ausgangsposition liegen. Zum anderen wird eine Wartezeit t_{w} abgewartet, da es ineffizient wäre, mit der vergleichsweise langsamen Veränderung der zweiten Position D₂ kurzzeitig auftretenden Änderungen der ersten Position zu folgen. Grundsätzlich wäre es aber denkbar, jedwede Änderungen zu berücksichtigen, also keinen Schwellwert als Filter zu benutzen, und/oder keine Wartezeit vorzusehen.

Es sind verschiedene Varianten der ersten Ausführungsform denkbar. So könnte die Primärkorrektur mittels des Oberlenkers 7 statt mittels des Anbaugerät-Hubwerks 20 ausgeführt werden, das heißt die erste Position D1 könnte dem Oberlenker 7 zugeordnet sein. Auch könnte die Anbaugerät-Steuereinheit 23 den Oberlenker-Aktor 8 direkt ansteuern, wie in der nachfolgend beschriebenen zweiten Ausführungsform.

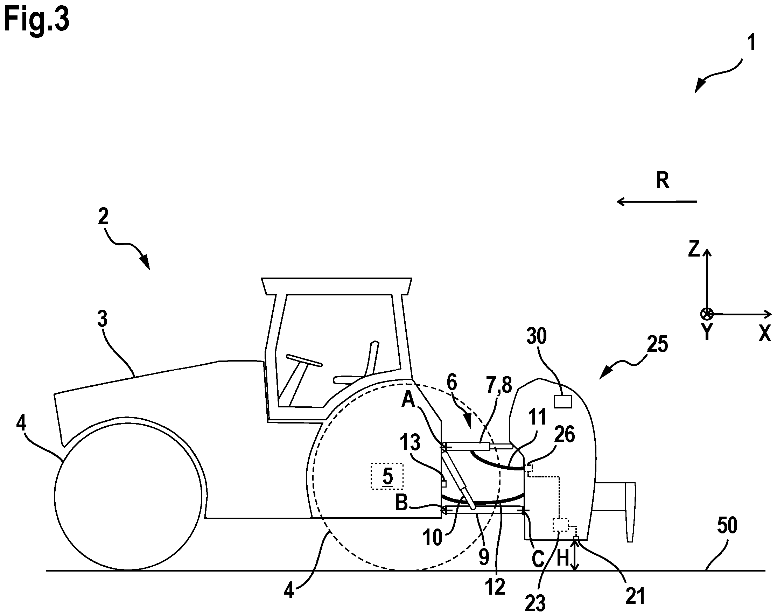

Fig. 3 zeigt eine zweite Ausführungsform eines erfindungsgemäßen Arbeitszugs 1, die weitgehend mit der ersten Ausführungsform übereinstimmt und insofern nicht nochmals beschrieben wird. In diesem Fall ist allerdings eine Feldspritze 25 als Anbaugerät an das Schlepper-Hubwerk 6 angekoppelt. Dementsprechend ist in diesem Fall die Fahrtrichtung R entgegengesetzt zur Längsachse X zur Front des Schleppers 2 ausgerichtet und der Sitz, das Lenkrad und andere Bedienelemente sind wie bei einer Straßenfahrt nach vorne orientiert. Die Anbaugerät-Steuereinheit 23 ist in diesem Fall nicht signalübertragend mit der Schlepper-Steuereinheit 5 verbunden, unter Umständen weil sie für eine derartige Verbindung nicht ausgelegt ist. Allerdings ist die Hydraulikleitung 11 nicht am Schlepper 2, sondern an der Feldspritze 25 angeschlossen. Die Feldspritze 25 ist wiederum über die zweite Hydraulikleitung 12 mit dem Schlepper 2 verbunden. Die Hydraulikzufuhr zum Oberlenker-Aktor 8 wird über ein Ventil 26 reguliert, das von der Anbaugerät-Steuereinheit 23 gesteuert wird. Somit kann letztere den Oberlenker 7 unter Umgehung der Schlepper-Steuereinheit 5 direkt ansteuern. Als Untergrundsensor 21 ist in diesem Fall ein kontaktlos arbeitender Abstandssensor vorgesehen, der als Führungsparameter einen Abstand H vom Untergrund 50 misst. Der Abstand H stellt einen Führungsparameter der Feldspritze 25 relativ zum Untergrund 50 dar.

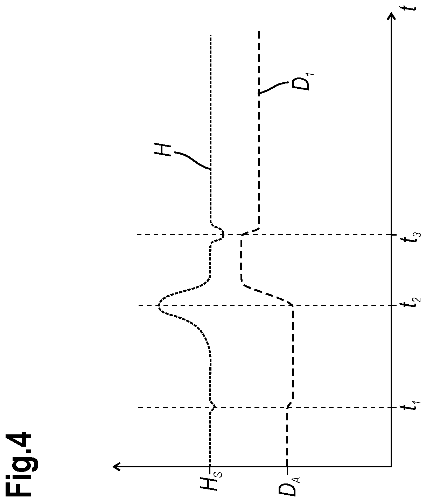

Da die Anbaugerät-Steuereinheit 23 nur den Oberlenker-Aktor 8 ansteuern kann, ist in diesem Fall keine kombinierte Korrekturstrategie möglich. Stattdessen stellt die erste Position D₁ die einzige Größe dar, die zur Korrektur des Abstands H verwendet wird. Fig.4 zeigt (in dimensionslosen Einheiten) zum einen den Abstand H als kurz gestrichelte Linie sowie die erste Position D₁ des Oberlenkers 7 als lang gestrichelte Linie. Zu Beginn entspricht der Abstand H einem Sollwert Hs und die erste Position D₁ entspricht wieder der Ausgangsposition D_{A}. Kurz vor einem ersten Zeitpunkt t₁ erfolgt ein Absinken des Abstands H unter den Sollwert Hs, was zum Zeitpunkt t₁ durch eine Verringerung der ersten Position D₁ kompensiert wird. Zu einem zweiten Zeitpunkt t₂ ist eine größere Korrektur notwendig, die durch ein Erhöhen der ersten Position D₁ erfolgt. Zu einem dritten Zeitpunkt t₃ ist eine geringfügige weitere Korrektur nötig, wobei die erste Position D₁ leicht verringert wird. Da in diesem Fall keine Sekundärkorrektur möglich ist, ist weder relevant, ob die Abweichung der ersten Position D₁ von der Ausgangsposition Da, einen Schwellwert überschreitet, noch ob eine Wartezeit t_{w} verstrichen ist. Im Gegensatz zum ersten Ausführungsbeispiel bleibt die erste Position D₁ nach dem dritten Zeitpunkt t₃ konstant und unterscheidet sich von der Ausgangsposition D_{A}. Insgesamt ergibt sich also eine gewisse Änderung der Winkelausrichtung der Feldspritze 25. Dies ist allerdings für das Arbeitsergebnis kaum relevant und somit akzeptabel.

Auch bei der zweiten Ausführungsform sind verschiedene Varianten denkbar. Zum Beispiel könnte die Anbaugerät-Steuereinheit 23 signalübertragend mit der Schlepper-Steuereinheit 5 verbunden sein. Somit könnte die Anbaugerät-Steuereinheit 23 die Unterlenker 9 für eine Sekundärkorrektur nutzen, analog zum ersten Ausführungsbeispiel. Auch könnte die Hydraulikleitung 11 mit dem Schlepper 2 verbunden sein, so dass die Anbaugerät-Steuereinheit 23 den Oberlenker 7 über die Schlepper-Steuereinheit 5 ansteuern kann. Der berührungsfreie Untergrundsensor 21 könnte durch einen Tastsensor ersetzt werden.

## Patentansprüche

1. Arbeitszug (1) mit einem Schlepper (2), aufweisend einen Fahrzeugkörper (3), eine Schlepper-Steuereinheit (5) sowie ein von dieser ansteuerbares, verstellbares Schlepper-Hubwerk (6), das einen gegenüber dem Fahrzeugkörper (3) schwenkbaren Oberlenker (7) aufweist sowie zwei bezüglich einer Querachse (Y) seitlich hierzu versetzte und bezüglich einer Hochachse (Z) wenigstens teilweise darunter angeordnete Unterlenker (9), die aktorisch gegenüber dem Fahrzeugkörper (3) schwenkbar sind, sowie mit einem Anbaugerät (15, 25), das im Betriebszustand am Schlepper-Hubwerk (6) angekoppelt ist und das wenigstens einen Untergrundsensor (21) sowie eine Anbaugerät-Steuereinheit (23) aufweist, die dazu eingerichtet ist, mittels des wenigstens einen Untergrundsensors (21) einen Führungsparameter (F, H) des Anbaugeräts (15, 25) in Relation zu einem Untergrund (50) zu detektieren und mit einem Sollwert (Fs, Hs) zu vergleichen, **dadurch gekennzeichnet, dass**
die Anbaugerät-Steuereinheit (23) dazu eingerichtet ist, bei einer Abweichung vom Sollwert (Fs, Hs) das Schlepper-Hubwerk (6) wenigstens indirekt anzusteuern, um eine Korrektur vorzunehmen, durch welche der Führungsparameter (F, H) zumindest an den Sollwert (Fs, Hs) angenähert wird.

2. Arbeitszug nach Anspruch 1, **dadurch gekennzeichnet, dass** der Oberlenker (7) durch einen Oberlenker-Aktor (8) längenverstellbar ist und die Anbaugerät-Steuereinheit (23) dazu eingerichtet ist, den Oberlenker-Aktor (8) wenigstens indirekt anzusteuern, um die Korrektur vorzunehmen.

3. Arbeitszug nach einem der vorangehenden Ansprüche, **dadurch gekennzeichnet, dass** der Führungsparameter ein Abstand (H) des Anbaugeräts (15, 25) vom Untergrund (50) bezüglich einer Hochachse (Z) ist und wenigstens ein Untergrundsensor (21) als Abstandssensor ausgebildet ist.

4. Arbeitszug nach einem der vorangehenden Ansprüche, **dadurch gekennzeichnet, dass** der Führungsparameter eine zwischen dem Anbaugerät (15, 25) und dem Untergrund (50) wirkende Last (F) ist und wenigstens ein Untergrundsensor (21) als Lastsensor ausgebildet ist.

5. Arbeitszug nach einem der vorangehenden Ansprüche, **dadurch gekennzeichnet, dass** die Anbaugerät-Steuereinheit (23) dazu eingerichtet ist, ein Steuerkommando an die Schlepper-Steuereinheit (5) zu senden, durch welches die Schlepper-Steuereinheit (5) das Schlepper-Hubwerk (6) ansteuert, um die Korrektur vorzunehmen.

6. Arbeitszug nach einem der vorangehenden Ansprüche, **dadurch gekennzeichnet, dass** das Anbaugerät (15, 25) im Betriebszustand über eine drahtgebundene Schnittstelle (13) mit dem Schlepper (2) verbunden ist, über welche Schnittstelle (13) das Steuerkommando übertragbar ist.

7. Arbeitszug nach einem der vorangehenden Ansprüche, **dadurch gekennzeichnet, dass** wenigstens ein Aktor (8, 10) des Schlepper-Hubwerks derart mit dem Anbaugerät (15, 25) verbindbar ist, dass er unter Umgehung der Schlepper-Steuereinheit (5) von der Anbaugerät-Steuereinheit (23) ansteuerbar ist, um die Korrektur vorzunehmen.

8. Arbeitszug nach einem der vorangehenden Ansprüche, **dadurch gekennzeichnet, dass** das Anbaugerät (15, 25) einen im Betriebszustand mit dem Schlepper-Hubwerk (6) verbundenen ersten Geräteabschnitt (16) aufweist sowie einen zweiten Geräteabschnitt (18), welcher durch ein von der Anbaugerät-Steuereinheit (23) ansteuerbares Anbaugerät-Hubwerk (20) gegenüber dem ersten Geräteabschnitt (16) verstellbar ist, um den Führungsparameter (F, H) zu verändern.

9. Arbeitszug nach einem der vorangehenden Ansprüche, **dadurch gekennzeichnet, dass** die Anbaugerät-Steuereinheit (23) dazu eingerichtet ist, zunächst eine Primärkorrektur vorzunehmen, bei welcher sie das Anbaugerät-Hubwerk (20) ansteuert und aus einer Ausgangsposition (D_{A}) herausführt, und nachfolgend eine Sekundärkorrektur vorzunehmen, bei welcher sie wenigstens indirekt das Schlepper-Hubwerk (6) entsprechend der Primärkorrektur ansteuert und das Anbaugerät-Hubwerk (20) entgegengesetzt zur Primärkorrektur ansteuert und zurück in Richtung der Ausgangsposition (D_{A}) führt.

10. Arbeitszug nach einem der vorangehenden Ansprüche, **dadurch gekennzeichnet, dass** die Anbaugerät-Steuereinheit (23) dazu eingerichtet ist, zunächst eine Primärkorrektur vorzunehmen, bei welcher sie den Oberlenker (7) ansteuert und aus einer Ausgangsposition (D_{A}) herausführt, und nachfolgend eine Sekundärkorrektur vorzunehmen, bei welcher sie wenigstens indirekt die Unterlenker (9) entsprechend der Primärkorrektur ansteuert und den Oberlenker (7) entgegengesetzt zur Primärkorrektur ansteuert und zurück in Richtung der Ausgangsposition (D_{A}) führt.

11. Arbeitszug nach einem der vorangehenden Ansprüche, **dadurch gekennzeichnet, dass** die Anbaugerät-Steuereinheit (23) dazu eingerichtet ist, die Sekundärkorrektur vorzunehmen, wenn eine Wartezeit (t_{w}) ab Beginn der Primärkorrektur abgelaufen ist.

12. Arbeitszug nach einem der vorangehenden Ansprüche, **dadurch gekennzeichnet, dass** die Anbaugerät-Steuereinheit (23) dazu eingerichtet ist, die Sekundärkorrektur vorzunehmen, wenn die Primärkorrektur zu einer Mindestauslenkung aus der Ausgangsposition (D_{A}) führt.

13. Arbeitszug nach einem der vorangehenden Ansprüche, **dadurch gekennzeichnet, dass** das Anbaugerät (15, 25) eine Benutzerschnittstelle (30) aufweist, über welche der Sollwert (Fs, Hs) eingebbar ist.

14. Anbaugerät (15, 25), insbesondere für einen Arbeitszug nach einem der vorangehenden Ansprüche, welches Anbaugerät (15, 25) an ein Schlepper-Hubwerk (6) ankoppelbar ist und wenigstens eine Anbaugerät-Steuereinheit (23) sowie wenigstens einen Untergrundsensor (21) aufweist, wobei die Anbaugerät-Steuereinheit (23) dazu eingerichtet ist, mittels des wenigstens einen Untergrundsensors (21) einen Führungsparameter (F, H) des Anbaugeräts (15, 25) relativ zu einem Untergrund (50) zu detektieren und mit einem Sollwert (Fs, Hs) zu vergleichen,
**dadurch gekennzeichnet, dass**
die Anbaugerät-Steuereinheit (23) dazu eingerichtet ist, bei einer Abweichung vom Sollwert (Fs, Hs) das Schlepper-Hubwerk (6) wenigstens indirekt anzusteuern, um eine Korrektur vorzunehmen, durch welche der Führungsparameter (F, H) wenigstens an den Sollwert (Fs, Hs) angenähert wird.
